# EUROPEAN PATENT SPECIFICATION

(11) **EP 0 846 327 B1**
(45) Date of publication and mention of the grant of the patent: **16.06.1999**
(21) Application number: 96925217.0
(22) Date of filing: 05.07.1996
(51) Int. Cl.: G21C 3/34, G21C 3/352

(54) **SPACER FOR A FUEL ASSEMBLY AND A FUEL ASSEMBLY**
ABSTANDSHALTER FÜR BRENNSTABBÜNDEL UND BRENNSTABBÜNDEL
DISPOSITIF D'ESPACEMENT POUR UN ASSEMBLAGE COMBUSTIBLE ET ASSEMBLAGE COMBUSTIBLE

(30) Priority: 24.08.1995 SE 9502933
(43) Date of publication of application: 10.06.1998
(73) Proprietor: ABB ATOM AB, 721 63 Västeras (SE)
(72) Inventor: FARKAS, Tibor, S-723 49 Västeras (SE)
(74) Representative: Sjöholm, Annette
(86) International application number: SE9600915
(87) International publication number: WO9708712

(56) References cited:
- EP-A- 0 518 306
- DE-A- 2 600 878
- SE-B- 465 395
- SE-B- 470 342
- US-A- 5 375 154

## Description

### TECHNICAL FIELD

The present invention relates to a spacer for a nuclear fuel assembly for a light-water nuclear reactor, more particularly a boiling water reactor or a pressurized-water reactor, and a nuclear fuel assembly comprising spacers according to the present invention. The fuel assembly comprises a plurality of elongated elements which are retained and fixed by a number of spacers arranged in spaced relationship to each other along the bundle. A structure comprising elongated elements retained by spacers is referred to as a bundle. In those cases where the fuel assembly is intended for a boiling water nuclear reactor, the bundle is surrounded by a tubular casing referred to as a fuel channel. Further, the fuel assembly normally comprises a top tie plate and a bottom tie plate. A coolant is adapted to flow from below and up through the normally vertically arranged fuel assembly and, during a nuclear reaction, to cool the elongated elements arranged in the assembly.

### BACKGROUND ART, PROBLEMS

The design of the spacers comprised by the fuel assembly is very important for the performance of the fuel assembly. A very important factor when designing a spacer for a light-water reactor is to ensure that the spacer achieves a good cooling of the fuel rods. In those cases where the cooling is not sufficient, so-called dryout may occur in a boiling water reactor and so-called DNB (Departure from Nucleate Boiling) may occur in a pressurized-water reactor. In serious cases, dryout and DNB, respectively, give rise to penetration of the fuel rods.

Thus, the spacers influence the flow of the coolant and hence the cooling of the fuel rods. To achieve good cooling, it is important that the spacers have as low a flow resistance as possible, in which case it will give rise to a low pressure drop when the coolant flows upwards through the core.

It is known that, in a region immediately below the spacer, where the coolant has not yet passed through the spacer, a deterioration of the coolant film occurs on the fuel rods, whereas in a region above the spacer, where the coolant has just passed through the spacer, a reinforcement of the water film instead occurs. The reinforcement of the coolant film is due to the turbulence which arises in the coolant when it passes through a spacer. The greatest risk of dryout exists in the upper part of the fuel just below the spacers.

SE 465 395 shows a spacer comprising a latticework of sheet-metal strips, arranged crosswise and standing on edge, which form substantially square cells, wherein each cell positions an elongated element.

SE 470 342 shows a spacer which is composed of sleeves, each of which positions an elongated element. The sleeves which position the elongated elements are located in at least two spaced-apart planes, across the bundle, and have been arranged such that the elements which run through the sleeves in one plane extend through gaps between the sleeves in the other plane or planes. The resistance-forming transverse area of the spacer in each plane across the bundle thus becomes smaller than the resistance-forming transverse area of a spacer with all the sleeves in the same plane. The total flow resistance thus decreases whereby the efficiency of the cooling increases.

The object of the invention is to achieve a spacer comprising a latticework of sheet-metal strips, arranged crosswise and standing on edge, with a reduced resistance-forming transverse area, in relation to the prior art, in the main part of the cross section of the spacer such that the flow resistance in these cross sections through the bundle is reduced.

### SUMMARY OF THE INVENTION, ADVANTAGES

The present invention relates to a spacer and a fuel assembly comprising such spacers, with properties such as a reduced resistance-forming area, in relation to the prior art, in each plane across a bundle of elongated elements. These properties are achieved by means of a spacer according to the characterizing part of claim 1.

The spacer according to the invention comprises a plurality of cells formed from a latticework, for example orthogonal or hexagonal, of crossed first and second strip elements standing on edge. The strip elements are arranged in such a way that a largely conically shaped or dome-shaped spacer is obtained. This is achieved in that those of the cells which are arranged equidistantly from a central point in the latticework of the spacer form a concentric cell segment. At least some of the concentric cell segments are displaced in the axial direction in relation to a cell segment positioned radially inside in such a way that the cell segments with an increasing radius are subjected to a substantially monotonous displacement in the axial direction of the elongated elements positioned by the spacer.

The advantage of the invention is that the axially and monotonously displaced cells in the latticework entail a small flow resistance in each section across the flow direction and hence only give rise to a low pressure drop.

Another advantage is that the low pressure drop caused by the spacer makes it possible to arrange additional spacers of this type in the upper part of the fuel assembly where the risk of dryout is greatest.

A further advantage is that the latticework may be designed in a simple and hence cost-effective manner.

### BRIEF DESCRIPTION OF THE DRAWINGS

Figure 1 shows a boiling water fuel assembly with spacers according to the invention.

Figure 2 shows a pressurized-water fuel assembly with spacers according to the invention.

Figure 3a shows in a view from above a spacer for a boiling water reactor. The cells in the latticework of the spacer are arranged in concentric cell segments.

Figure 3b shows in a view from the side a spacer according to Figure 3a. The concentric cell segments are arranged spaced-apart in the axial direction.

Figure 3c shows in a view from the side an alternative embodiment of the spacer in Figure 3b wherein the strip elements in the latticework form cell segments which are arranged axially displaced and partially overlapping.

Figure 3d shows in perspective view a spacer according to Figure 3c.

Figure 4a shows in a view from above an alternative embodiment of a spacer for a boiling water reactor. The cells in the latticework of the spacer are arranged in concentric cell segments.

Figure 4b shows in a view from the side a spacer according to Figure 4a wherein the three upper concentric cell segments shown in the figure are arranged in the same axial plane and wherein the other concentric cell segments are arranged spaced-apart in the axial direction.

Figure 4c shows an alternative embodiment of the spacer in Figure 4b wherein the cell segments are arranged axially displaced and partially overlapping in the axial direction.

Figure 5a shows in a view from the side an alternative embodiment of the spacer in Figure 4a. The three upper cell segments shown in the figure are arranged in the same axial plane and the other concentric cell segments are arranged axially spaced-apart.

Figure 5b shows an alternative embodiment of the spacer in Figure 5a, wherein the cell segments are arranged displaced and partially overlapping in the axial direction.

Figure 6a shows in a view from above a spacer for a pressurized-water reactor. The cells in the latticework of the spacer are arranged in concentric cell segments.

Figure 6b shows in a view from the side a spacer according to Figure 6a. The spacer comprises concentric cell segments wherein the four upper cell segments shown in the figure are arranged in the same axial plane and wherein the other concentric cell segments are arranged axially spaced-apart.

Figure 6c shows an alternative embodiment of the spacer in Figure 6b, wherein the four upper cell segments shown in the figure are arranged in the same axial plane and wherein the other concentric cell segments are arranged displaced and partially overlapping in the axial direction.

### DESCRIPTION OF THE PREFERRED EMBODIMENTS

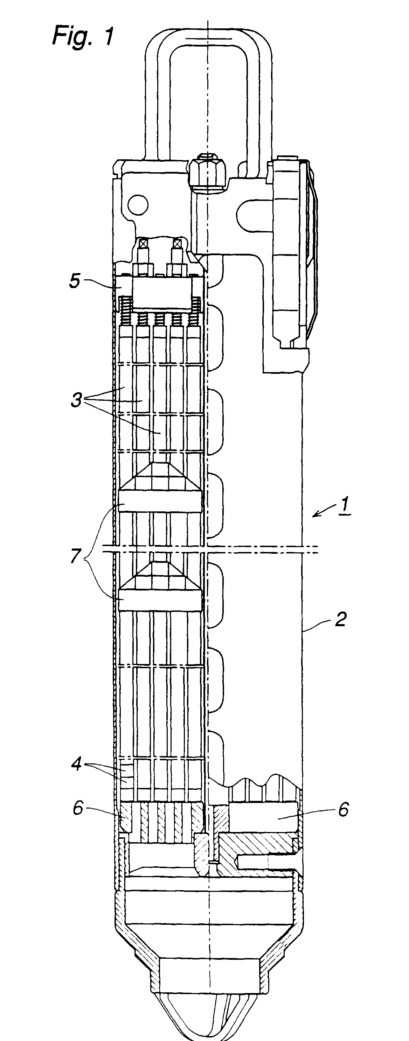

Figure 1 shows a boiling water fuel assembly 1 which comprises a long tubular container, of rectangular cross section, referred to as fuel channel 2. The fuel channel 2 is open at both ends so as to form a continuous flow passage through which the coolant of the reactor flows. The fuel assembly 1 comprises a large number of equally long tubular fuel rods 3, arranged in parallel in a bundle, in which pellets 4 of a nuclear fuel are arranged. The fuel rods 3 are retained at the top by a top tie plate 5 and at the bottom by a bottom tie plate 6. The fuel rods 3 are kept spaced from each other by means of spacers 7 and are prevented from bending or vibrating when the reactor is in operation.

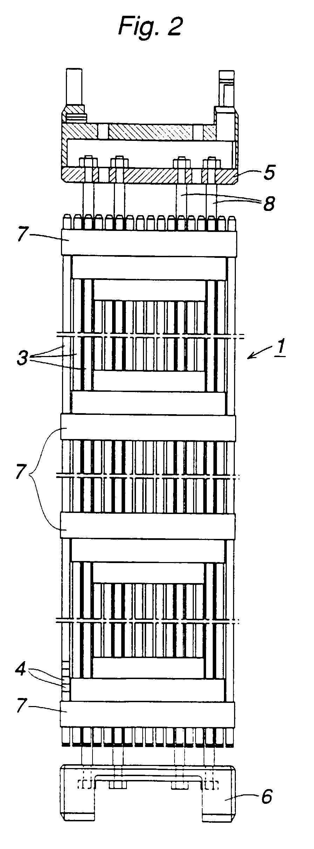

Figure 2 shows a pressurized-water fuel assembly 1 comprising a number of elongated tubular fuel rods 3 and control rod guide tubes 8 arranged in parallel. In the fuel rods 3, pellets 4 of a nuclear fuel are arranged. The control rod guide tubes 8 are retained at the top by a top tie plate 5 and at the bottom by a bottom tie plate 6. The fuel rods 3 are spaced apart from each other by means of spacers 7.

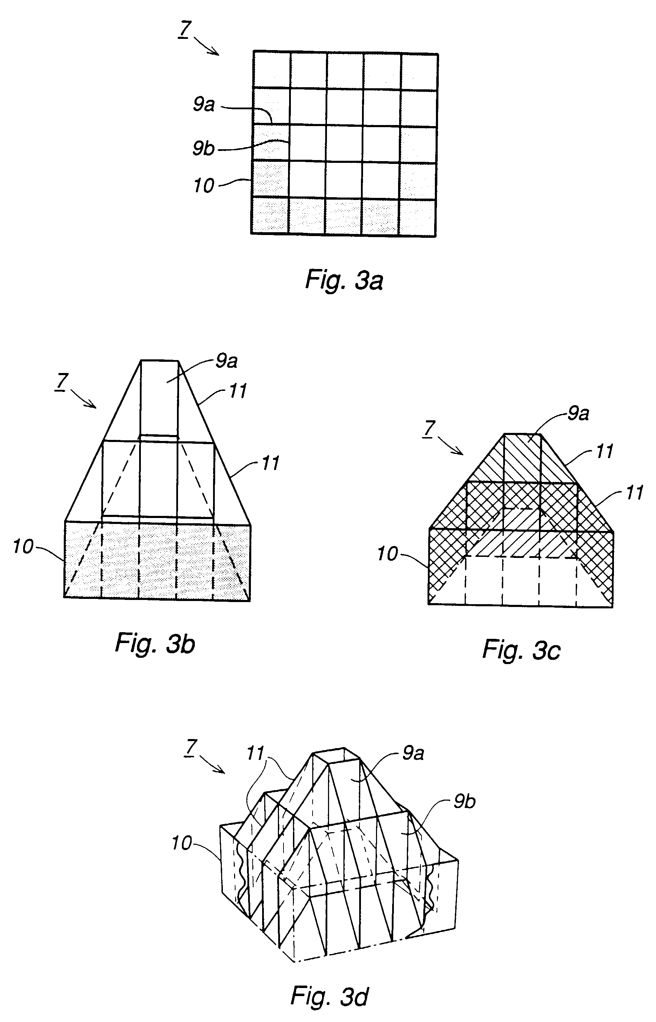

Figures 3a-6c show a spacer 7 with a latticework composed of crossed first and second strip elements 9a, 9b standing on edge. The spacer 7 is intended to position a plurality of elongated elements extending through it, for example fuel rods 3 or control rod guide tubes 8. The preferably orthogonal latticework is surrounded by a sleeve-shaped structure 10.

Figure 3a shows in a view from above a spacer 7 for a boiling water reactor for positioning fuel rods, arranged in a sub-assembly, in a latticework comprising (5x5) cells, where for the sake of clarity the fuel rods 3 are removed. The strip elements 9a, 9b in the latticework form cells arranged in concentric cell segments. An external such cell segment is shaded in Figure 3a.

Figure 3b shows the spacer 7 according to Figure 3a in a view from the side. The concentric cell segments are arranged completely spaced-apart in the axial direction. The cell segments are provided with oblique edges 11, shown in the figure, connecting adjacently arranged and axially spaced-apart cell segments. More particularly, each cell segment positioned radially outside is completely spaced-apart in the axial direction from the cell segment positioned immediately inside. In Figure 3b, the external cell segment, corresponding to that in Figure 3a, is shaded.

Figure 3c shows in a view from the side an alternative embodiment of the spacer 7 in Figure 3a where the strip elements 9a, 9b in the latticework form concentric cell segments which are arranged displaced and partially overlapping in the axial direction. In Figure 3c, the shapes of the different strip elements 9a, 9b are clarified with the aid of different shadings.

Figure 3d shows in perspective view a spacer 7 according to Figure 3c. This clearly shows that the spacer 7 has a substantially conical shape and that the concentric cell segments are displaced in relation to each other, such that the cell segments of the latticework with an increasing radius are subjected to a substantially monotonous displacement in the axial direction.

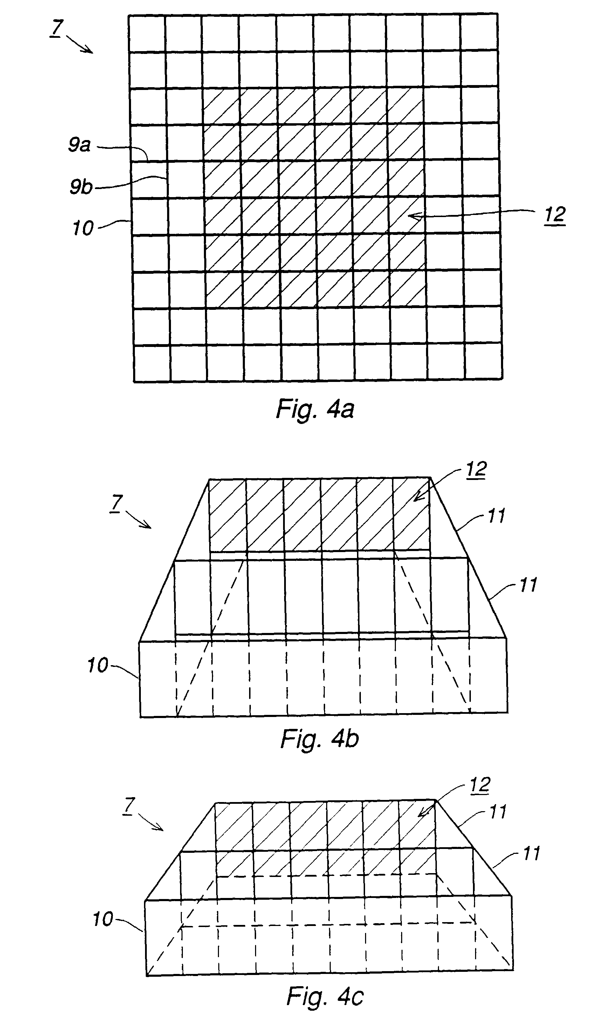

Figure 4a shows in a view from above a spacer for a boiling water reactor for positioning fuel rods 3 in an assembly in a lattice comprising 10x10 cells. The strip elements 9a, 9b in the latticework form cells arranged in concentric cell segments in the same way as in the spacer 7 in Figure 3a. The three innermost ones of the concentric cell segments are marked by slanting lines, the region being designated 12.

Figure 4b shows in a view from the side a spacer 7 according to Figure 4a wherein the three upper concentric cell segments shown in Figure 4a are arranged in the same axial plane 12 and wherein the other concentric cell segments are arranged spaced-apart in the axial direction. This results in the formation of a spacer 7 with three axially displaced planes formed from concentric cell segments.

Figure 4c shows an alternative embodiment of the spacer in Figure 4b wherein the three upper cell segments shown in the figure are arranged in the same axial plane, 12 and wherein the other concentric cell segments are arranged displaced downwardly and partially overlapping in the axial direction.

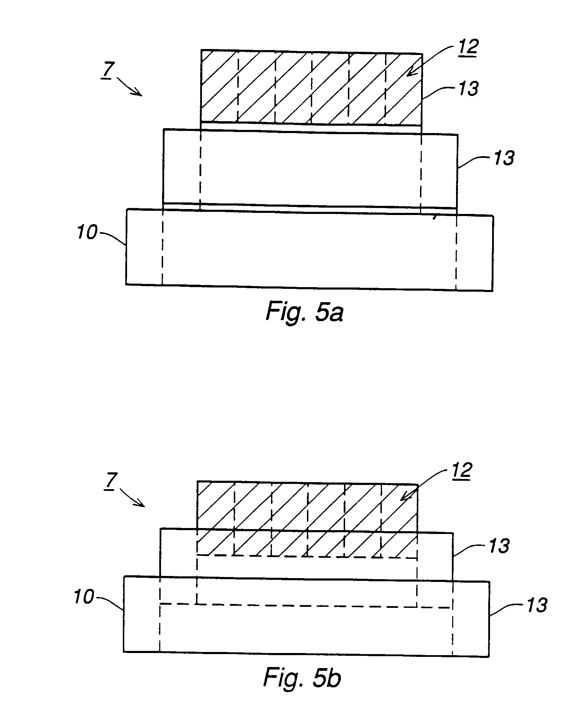

Figure 5a shows in a view from the side an alternative embodiment of the spacer 7 in Figure 4a wherein the cell segments are formed from strip elements 9a, 9b with vertical edges 13, shown in Figure 5a, connecting adjacently arranged and axially spaced-apart cell segments. The three upper cell segments shown in the figure are arranged in the same axial plane 12 and the other concentric cell segments are arranged spaced-apart in the axial direction.

Figure 5b shows an alternative embodiment of the spacer 7 in Figure 5a wherein the three upper cell segments shown in the figure are arranged in the same axial plane 12 and wherein the other concentric cell segments are arranged displaced downwardly and partially overlapping in the axial direction.

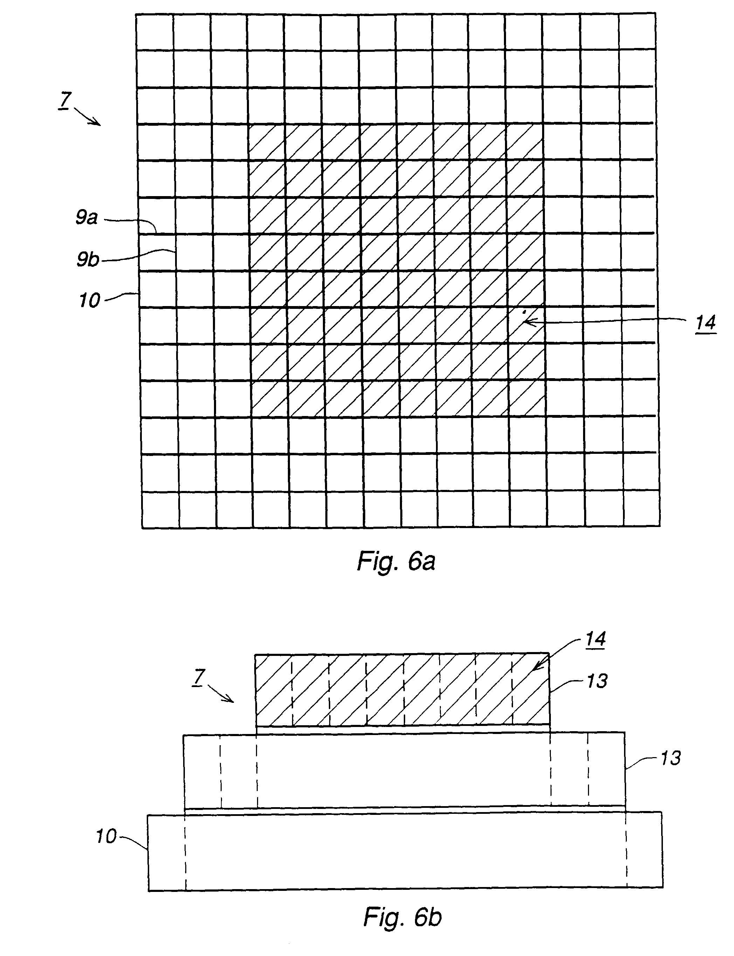

Figure 6a shows in a view from above a spacer 7 according to the invention for a pressurized-water reactor for positioning of elongated elements 3, 8 in an assembly with a latticework comprising 14x14 cells, where for the sake of clarity the elongated elements 3, 8 are removed. The strip elements 9a, 9b in the latticework form cells arranged in concentric cell segments shown in the same way as in Figure 3a. The four innermost ones of the concentric cell segments are marked by slanting lines, the region being designated 14.

Figure 6b shows in a view from the side a spacer 7 according to Figure 6a. The spacer 7 is provided with vertical edges 13, shown in Figure 6b, connecting adjacently arranged and axially spaced-apart cell segments. The spacer 7 comprises concentric cell segments wherein the four upper cell segments shown in the figure are arranged in the same axial plane 14 and wherein the other concentric cell segments are arranged spaced-apart in the axial direction.

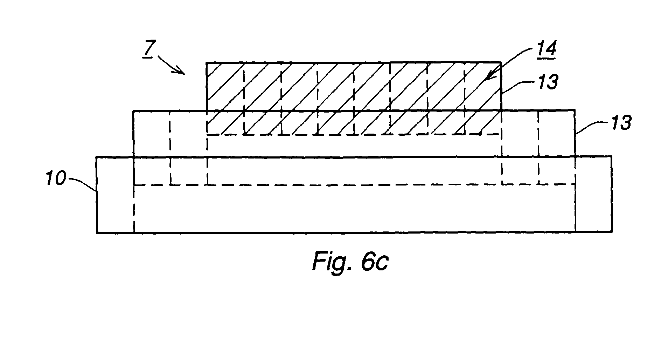

Figure 6c shows an alternative embodiment of the spacer 7 in Figure 6b, wherein the four upper cell segments shown in the figure are arranged in the same axial plane 14 and wherein the other concentric cell segments are arranged displaced and partially overlapping in the axial direction.

The vertical edges 13 shown in Figures 5a, 5b, 6b and 6c, connecting adjacently arranged and axially spaced-apart cell segments, may, of course, also be designed with oblique edges 11 corresponding to those shown in Figures 3b, 3c, 4b and 4c and vice versa.

The spacer 7 according to the invention may be arranged as the spacers 7 according to Figure 3c are arranged in Figure 1, that is, they are all facing in the same direction with the tip of the substantially conically shaped spacer 7 facing downstream in the fuel assembly 1.

Alternatively, the spacers 7 are arranged as the spacers 7 according to Figure 6b are arranged in Figure 2, that is, every second spacer 7 is facing upstream with its central part and every second spacer is facing downstream with its central part. In this way, a flow of coolant is obtained through the fuel assembly which is alternately concentrated and diverged while passing through the spacers 7.

The spacers 7 may, of course, also be arranged with their central parts upstream in the fuel assembly or with the central parts, otherwise than every second one, alternately downstream and upstream in an arbitrary pattern.

In the figures, the spacers 7 with cell segments are shown in three planes. In the case of a larger spacer lattice, for example with 18x18 cells, it is, however, suitable to design the spacer 7 in four or more axially displaced planes spaced-apart or partially overlapping. The spacer 7 is preferably designed such that the number of cells in each plane is approximately equally large.

In all the figures, an orthogonal latticework is shown. It is, of course, also possible to apply the invention to other latticeworks, such as hexagonal ones.

## Claims

1. A spacer (7) intended to retain elongated elements (3, 8) in a nuclear reactor, which spacer (7) comprises a plurality of cells formed from a latticework of crossed first and second strip elements (9a, 9b) standing on edge, wherein those of the cells which are arranged equidistantly from the centre of the spacer (7) form a concentric cell segment of the latticework, **characterized** in that at least one of the concentric cell segments is arranged such that at least one part of a cell segment located radially outside is axially displaced in relation to a cell segment positioned inside such that the cell segment of the latticework with an increasing radius is subjected to a substantially continuous displacement in the axial direction of the elongated elements.

2. A spacer (7) according to claim 1, **characterized** in that the latticework is surrounded by a sleeve-shaped structure (10).

3. A spacer (7) according to claim 1, **characterized** in that the cell segments at least partially overlap each other in the axial direction.

4. A spacer (7) according to claim 1, **characterized** in that its crossed strip elements (9a, 9b) are provided with an upper and a lower edge, wherein at least one upper or lower edge is designed inclined in relation to a horizontal plane through the spacer (7).

5. A fuel assembly (1) for a nuclear reactor, **characterized** in that it comprises a spacer (7) according to any of the preceding claims.

6. A fuel assembly (1) according to claim 5, **characterized** in that it comprises a plurality of spacers which are all arranged such that their central parts are arranged at the downstream edge of the spacer (7).

7. A fuel assembly (1) according to claim 5, **characterized** in that it comprises at least two spacers, one being arranged such that its central part is arranged at the downstream edge of the spacer (7) and the other such that its central part is arranged at the upstream edge of the spacer (7).

## Patentansprüche

1. Distanzhalter (7) vorgesehen längliche Elemente (3, 8) in einem Kernreaktor festzuhalten, wobei der Distanzhalter (7) eine Mehrzahl aus einem Gitterwerk gekreuzter erster und zweiter, auf der Kante stehender Streifenelemente (9a, 9b) gebildeter Zellen umfaßt, wobei diejenigen Zellen, die im gleichen Abstand von der Mitte des Distanzhalters (7) liegen, ein konzentrisches Zellsegment des Gitterwerkes bilden, **dadurch gekennzeichnet**, daß mindestens eines der konzentrischen Zellsegmente so angeordnet ist, daß mindestens ein Bereich eines radial außerhalb liegenden Zellsegmentes zu einem innenliegenden Zellsegment verschoben wird, sodaß das Zellsegment des Gitterwerkes mit zunehmendem Radius einer im wesentlichen durchgehenden Verschiebung in achsialer Richtung der länglichen Elemente unterworfen wird.

2. Distanzhalter (7) gemäß Patentanspruch 1, **dadurch gekennzeichnet**, daß das Gitterwerk von einer büchsenförmigen Struktur umschlossen wird.

3. Distanzhalter (7) gemäß Patentanspruch 1, **dadurch gekennzeichnet**, daß die Zellsegmente einander in achsialer Richtung mindestens teilweise decken.

4. Distanzhalter (7) gemäß Patentanspruch 1, **dadurch gekennzeichnet**, daß dessen gekreuzte Streifenelemente (9a, 9b) mit einer Ober- und einer Unterkante versehen sind, wobei mindestens eine Ober- oder Unterkante zu einer Horizontalebene durch den Distanzhalter (7) geneigt ausgebildet ist.

5. Brennstoffvorrichtung (1) für einen Kernreaktor, **dadurch gekennzeichnet**, daß sie einen Distanzhalter (7) gemäß einem der vorhergehenden Patentansprüche umfaßt.

6. Brennstoffvorrichtung (1) gemäß Patentanspruch 5, **dadurch gekennzeichnet**, daß sie eine Mehrzahl Distanzhalter umfaßt, die alle so angeordnet sind, daß deren Mittelbereiche an der stromabwärts liegenden Kante des Distanzhalters (7) angeordnet sind.

7. Brennstoffvorrichtung (1) gemäß Patentanspruch 5, **dadurch gekennzeichnet,** daß sie mindestens zwei Distanzhalter umfaßt, wobei der eine so angeordnet ist, daß dessen Mittelbereich an der stromabwärts liegenden Kante des Distanzhalters (7) angeordnet ist und der andere so, daß dessen Mittelbereich an der stromaufwärts liegenden Kante des Distanzhalters (7) angeordnet ist.

## Revendications

1. Entretoise (7) destinée à maintenir des éléments (3, 8) oblongs dans un réacteur nucléaire, l'entretoise (7) comportant une pluralité de cellules formées à partir d'un réseau de premiers et seconds éléments (9a, 9b) en forme de bandes croisés reposant sur champ, dans lequel les cellules qui sont disposées équidistantes du centre de l'entretoise (7) forment un segment de cellules concentriques du réseau, caractérisée en ce que au moins l'un des segments de cellules concentriques est disposé de sorte que au moins une partie d'un segment de cellule se trouvant radialement vers l'extérieur est déplacé axialement par rapport à un segment de cellule positionné à l'intérieur de sorte que le segment de cellule du réseau ayant un rayon accru est soumis à un déplacement sensiblement continu dans la direction axiale des éléments oblongs.

2. Entretoise (7) suivant la revendication 1, caractérisée en ce que le réseau est entouré par une structure (10) en forme de manchon.

3. Entretoise (7) suivant la revendication 1, caractérisée en ce que les segments de cellules se chevauchent au moins partiellement les uns les autres suivant la direction axiale.

4. Entretoise (7) suivant la revendication 1, caractérisée en ce que ses éléments (9a, 9b) en forme de bandes croisées sont munis d'un bord supérieur et d'un bord inférieur, dans lequel au moins un bord supérieur ou inférieur est conçu de manière inclinée par rapport à un plan horizontal passant par l'entretoise (7).

5. Assemblage (1) combustible pour un réacteur nucléaire, caractérisé en ce qu'il comporte une entretoise (7) suivant l'une quelconque des revendications précédentes.

6. Assemblage (1) combustible suivant la revendication 5, caractérisé en ce qu'il comporte une pluralité d'entretoises qui sont toutes disposées de sorte que leur partie centrale respective est disposée au bord en aval de l'entretoise (7).

7. Assemblage (1) combustible suivant la revendication 5, caractérisé en ce qu'il comporte au moins deux entretoises, l'une étant disposée de sorte que sa partie centrale est disposée au bord en aval de l'entretoise (7) et l'autre de sorte que sa partie centrale est disposée au bord en amont de l'entretoise (7).
